# EUROPEAN PATENT APPLICATION

(11) **EP 2 000 362 A1**
(43) Date of publication of application: **10.12.2008**
(21) Application number: 08157879.1
(22) Date of filing: 09.06.2008
(51) Int. Cl.: B60R 5/04

(54) **Vehicle provided with a covering for the gap between a seat and a load space**

(30) Priority: 07.06.2007 IT TO20070402
(71) Applicant: SAN VALERIANO S.p.A., 10060 Virle Piemonte (Torino) (IT)
(72) Inventor: Roux, Fabio, 10100 Torino (IT); Strignano, Andrea, 10141 Torino (IT); Torti, Luca, 10045 Piossasco (TO) (IT)
(74) Representative: Robba, Pierpaolo

(57) **Abstract**

A vehicle for transporting of persons and objects, according to the present invention comprises:
- a passenger compartment and
- an inner luggage compartment communicating with the passenger compartment and forming inner sidewalls;
- a rear seat (SP) the position of which relative to the vehicle can be adjusted in the direction of travel of the vehicle;
- a flap crosspiece (5);
- crosspiece fastenings (7), each of them arranged on an inner side wall of the inner luggage compartment, and arranged for receiving and fixing the flap crosspiece (5), keeping it transversal to the direction of travel of the vehicle and so that it extends across the inner luggage compartment;
- a mobile covering (1, 3), fixed to the flap crosspiece (5) so as to be able to move relative to it and to cover the variable width gap (VP) possibly present between the rear seats and the luggage shelf of the rear luggage compartment.

## Description

### Field of the invention

The present invention relates to the field of the components for motor vehicles, and in particular the components of the inner luggage compartment and the passenger compartment.

### Background art

It is currently known equipping a motor vehicle, such as a motor vehicle, with rear seats provided with cushions the position of which can be adjusted in the direction of travel of the vehicle. In particular it is known to provide such adjustment of the position of the rear cushions with sliding guides or lever systems.

In case the luggage compartment (i.e. boot, trunk), which is located behind said rear seats, has a luggage shelf arranged substantially higher than the portion of bodywork on which the rear seats are fastened, due to the aforesaid longitudinal adjustment of the position of the rear cushions, a variable width gap can be created between the rear seats and the luggage shelf of the rear luggage compartment.

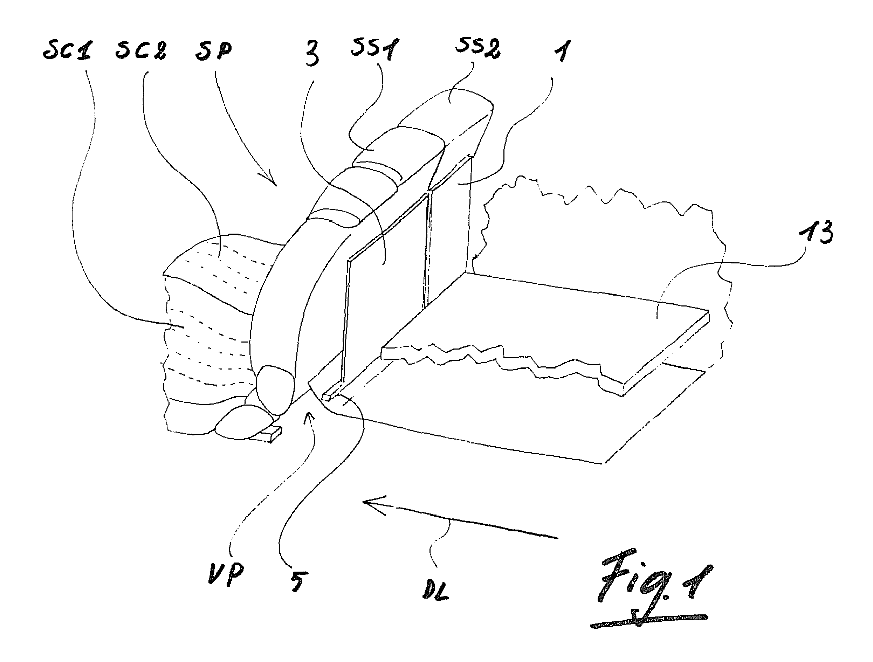

Several measures are known, for preventing the objects eventually loaded in the rear luggage compartment from falling unwantedly in said variable width gap - for conciseness' sake referred to as "back seat gap" VP in the present description, (Figure 1).

An object of the present invention supplying an alternative to such known measures.

### Summary of the invention

This object is achieved, in a first aspect of the present invention, with a vehicle having the features according to claim 1.

In an embodiment of the present invention, the crosspiece fastenings are arranged for fixing the flap crosspiece so as to keep it transversal to the direction of travel of the vehicle.

In an embodiment of the present invention, the vehicle is provided with a preloading system arranged for keeping the mobile covering rested against the rear seat.

In an embodiment of the present invention, the flap crosspiece comprises a bar.

In an embodiment of the present invention, the flap crosspiece forms a clearance between it and the portion of the floor of the vehicle bodywork below the flap crosspiece itself.

In an embodiment of the present invention, the rear seat substantially extends on the whole width of the passenger compartment.

In an embodiment of the present invention, the rear seat is a split bench.

The advantages achievable with the present invention will turn out more evident, to the technician of the field, from the following detailed description of a particular non-limiting embodiment, given with reference to the following schematic figures.

**List of Figures**
Figure 1 shows a perspective view of a particular embodiment of a cover and a vehicle according to the present invention, wherein the rear seats have the backs in raised position;
Figure 2 shows a side sectioned view of a detail of the vehicle of Figure 1;
Figure 3 shows a perspective view of the cover and the vehicle of Figure 1, wherein the rear seats have the backs pulled down.

### Detailed description

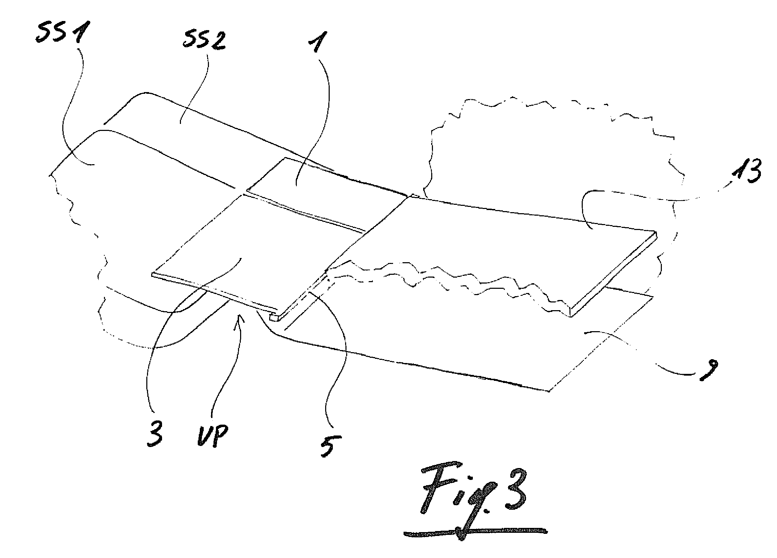

Figures 1-3 show a particular embodiment of a cover system for the gap between a seat and a load space of a vehicle, according to the present invention.

In such embodiment, the back seat gap VP is covered with one or more foldable covers 1, 3, also referred to as "flaps" (Figure 1).

In the present embodiment, two of such flaps are provided, since the rear seats SP are splitted and divided in two half-backs SS1, SS2, and two half seating cushions SC1, SC2 independently foldable one from another; moreover the position of each half seating cushion SC1, SC2 and half-back SS1, SS2 can be adjusted, in the direction of travel of the vehicle, independently from the other half-cushions and/or half-backs. Such adjustment is provided for instance by suitable lever systems or sliding guides. In the case of solid bench seats, the cover system can clearly comprise one single flap. If the back and/or the cushion of the rear seats are split in general in N portions, foldable one independently from another, the cover system can advantageously and clearly comprise N flaps.

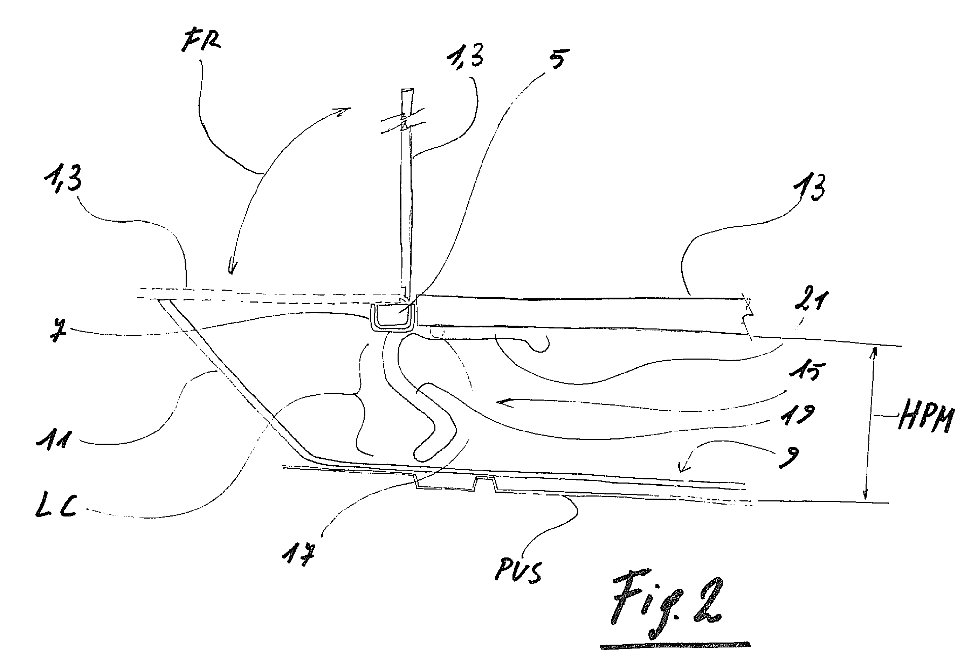

According to the present invention, flaps 1, 3 are fixed on A crosspiece 5 made, in the present embodiment, as a bar extending transversally to the direction of travel DL of the vehicle, and fixed to its ends to the side walls of the inner luggage compartment of the vehicle, through suitable side fastenings 7 (Figure 2).

Such side fastenings have, in the present embodiment, the shape of concave support seats, or cradles, in which the end of flap crosspiece 5 can be inserted so as to be supported.

Advantageously the flap crosspiece 5 can be inserted, or however fixed, to the side fastenings 7, and reversibly removed therefrom.

In the present embodiment each flap 1, 3 is fixed to the crosspiece 5 through a suitable hinge so as to be able to pivot around the crosspiece 5 itself (arrow FR of Figure 2), forming thereby a substantially rigid door. Suitable pre-load spring (not shown, but provided on the crosspiece 5 and/or flaps 1, 3 themselves) keep the free end of flaps 1, 3 constantly rested against the rear seats, so as to keep the back seat gap VP that can be possibly present always closed.

Advantageously, like in the embodiment shown in the Figures, each flaps 1, 3 is foldable and kept constantly rested against the corresponding portion of the rear seat SS1, SS2, SC1, SC2, independently from the other flaps: this allows to keep the back seat gap VP, that can be possibly present, always closed when the portions of the rear seat SS1, SS2, SC1, SC2 are folded independently one from another, or when the position of each portion is adjusted, in the direction of travel of the vehicle, independently from the position of the others. To this end, each door or flap 1, 3 has a width, in the direction perpendicular to the direction of travel of the vehicle, equal - or however substantially not greater- than the width of the corresponding foldable and/or adjustable portions SC1, SC2, SS1, SS2 of the cushion and the rear backrest.

In other embodiments not shown the flap or flaps can be fixed to the crosspiece 5 so as to slide for instance like a drawer, rather than rotate with a tilting.

Furthermore in the present embodiment the portion of the vehicle bodywork forming the lowest floor PVS of the inner luggage compartment, is covered with a mat 9, that can be more or less rigid and the front portion 11 of which is raised relative to the bodywork floor, preventing that small objects stored in the rear luggage compartment go lost under the rear seats, passing through the light LC - also said, in the present description, clearance - below the crosspiece 5 (Figure 2).

In the present embodiment, the rear luggage compartment is provided with a mobile luggage shelf 13 that, in its front part, is engaged through its sides with the side guides 15, so as to be able to reversibly adjust the height HPM of the mobile luggage shelf 13 relative to the bodywork floor PVS. In the present embodiment, on the sides of the front part of the floor 13 two pins 17 are provided which can slide along the side guides 15. Such guides 15, also referred to as "floor guides" 15, are made on the side walls of the rear luggage compartment, and for instance are fixed relative to it. In the present embodiment, each flat guide 15 comprises a slanted section 19 jointed with a substantially horizontal section 21, or however having a smaller inclination than the section 19; the slanted section 19 moreover, is tilted so as to make to displace the mobile luggage shelf 13 towards the rear of the vehicle when the floor 13 is raised. On the contrary the section 21 is oriented so as to allow the luggage shelf 13 be displaced towards the fore part of the vehicle, when the floor 13 has reached its uppermost loading position - in the present description such uppermost raised position is also referred to "upper loading position" of the mobile luggage shelf 13.

Advantageously the flap crosspiece 5 is arranged substantially at the same level in which the mobile luggage shelf 13 is in its upper loading position: this way the flaps 1, 3 completely pulled down, and the mobile luggage shelf 13, can form a unique loading surface, for instance when the backrests of the rear seats are completely pulled down and forward.

The matter that flaps 1, 3 are fixed on a removable crosspiece 5 allows the space available in the luggage compartment be increased in relatively simple and economic way, for instance when the mobile luggage shelf 13 is completely lowered, is removed from the vehicle, or when the rear seats are removed from the vehicle.

Advantageously the assembly made up of flaps 1, 3 and the flap crosspiece 5 is arranged for being reversibly removed from the vehicle with no need of removing also the mobile luggage shelf 13 possibly supplied with the vehicle: this makes the use of this assembly handier and easier. To this end, the assembly made up of flaps 1, 3 and the flap crosspiece 5 is not fixed to the mobile luggage shelf 13.

The embodiments previously described are susceptible of various modifications and changes without departing from the scope of the present invention.

For instance, the assembly flaps 1, 3 + crosspiece 5 can be used also on vehicles not provided with rear seats and front seats, and provided on the contrary only with front seats directly facing, or however adjacent to, an inner luggage compartment; such vehicle can be for instance a commercial vehicle or a cabriolet.

The examples and lists of possible variations in the present application are to be understood as non limiting.

## Claims

1. Vehicle for transporting persons and objects, comprising:
- a passenger compartment and
- an inner luggage compartment communicating with the passenger compartment, forming inner sidewalls and provided with a luggage shelf on which the objects to be transported in the inner luggage compartment can be laid;
- at least a rear seat (SP) the position of which relative to the vehicle itself can be adjusted according to the direction of travel of the vehicle;
- a flap crosspiece (5);
- crosspiece fastenings (7), arranged in the inner luggage compartment and/or in the passenger compartment, and arranged for receiving and fixing the flap crosspiece (5) to the rest of the vehicle;
- a mobile covering (1,3), fixed to the flap crosspiece (5) so as to be able to move relative to it and to cover the variable width gap (VP) possibly present between the rear seats and the luggage shelf of the inner luggage compartment.

2. Vehicle according to claim 1, wherein each one of the crosspiece fastenings (7) is arranged on a side wall in the inner luggage compartment.

3. Vehicle according to claim 1 or 2, wherein the crosspiece fastenings (7) are arranged for receiving and fixing the flap crosspiece (5) so that the latter extends through the inner luggage compartment.

4. Vehicle according to one or more preceding claims, wherein the mobile covering (1,3) comprises one or more doors hinged to the flap crosspiece.

5. Vehicle, according to one or more preceding claims, provided with a preload system arranged for keeping the mobile covering resting against the rear seat.

6. Vehicle second at least claim 5, wherein the preload system comprises a spring or other elastic element, possibly fixed to the flap crosspiece (5) and/or the mobile covering (1, 3).

7. Vehicle according to one or more preceding claims, wherein the flap crosspiece (5) can reversibly fixed to and removed from the crosspiece fastenings (7).

8. Vehicle according to one or more preceding claims, wherein the rear seat (SP) comprises a rear cushion (SC1, SC2) and a rear backrest (SS1, SS2).

9. Vehicle according to claim 8, wherein at least one of the rear cushion (SC1, SC2) and the rear backrest (SS1, SS2) comprises at least two portions foldable independently one from the other.

10. Vehicle according to at least claim 4, wherein the assembly comprising the flap crosspiece (5) and the one or more doors is arranged for being reversibly removed from the crosspiece fastenings (7), without removing the luggage shelf of the inner luggage compartment from such compartment.

11. Vehicle according to one or more preceding claims, wherein the position of the rear seat (SP) is adjustable according to the direction of travel of the same vehicle.

12. Vehicle according to one or more preceding claims, wherein the position of the rear cushion (SC1, SC2) is adjustable according to the direction of travel of the same vehicle.

13. Vehicle according to claim 12, wherein the position of the rear cushion (SC1, SC2) is adjustable through sliding guides and/or a system of levers.

14. Vehicle according to at least claim 8, wherein at least one of the rear cushion and the rear backrest comprises at least two adjustable portions (SS1, SS2, SC1, SC2), the position of each of which is adjustable according to the direction of travel of the same vehicle independently from the position of the other adjustable portions.

15. Vehicle according to claim 4 and at least one of claims 9, 12, 13 or 14, wherein the mobile covering (1,3) comprises a plurality of doors (a 1, 3) arranged for being able to be pulled down and raised independently one from another, so as to cover the variable width gap (VP) possibly present between the luggage shelf of the rear luggage compartment and each of the foldable and/or adjustable portions of the cushion (SC1, SC2) and/or of the rear backrest (SS1, SS2), when each of said foldable and/or adjustable portions (SC1, SC2, SS1, SS2) is pulled down and/or adjusted independently from the others.
